(19) **Europäisches Patentamt / European Patent Office / Office européen des brevets**

(11) **EP 3 549 223 B1**

(12) **EUROPEAN PATENT SPECIFICATION**

(45) Date of publication and mention
of the grant of the patent:
**04.11.2020  Bulletin 2020/45**

(21) Application number: **16806031.7**

(22) Date of filing: **30.11.2016**

(51) Int Cl.:
*H02J 3/06* *(2006.01)*    *H02H 7/28* *(2006.01)*

(86) International application number:
**PCT/EP2016/079300**

(87) International publication number:
**WO 2018/099555 (07.06.2018 Gazette 2018/23)**

(54) **INTERPHASE POWER CONTROLLER**

ZWISCHENPHASIGER LEISTUNGSREGLER

CONTRÔLEUR DE PUISSANCE INTERPHASÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.10.2019  Bulletin 2019/41**

(73) Proprietor: **ABB Power Grids Switzerland AG 5400 Baden (CH)**

(72) Inventors:
• **HÖRNEQUIST, Herman**
**197 91 Bro (SE)**
• **JOHANSSON, Nicklas**
**722 46 Västerås (SE)**

(74) Representative: **AWA Sweden AB P.O. Box 45086 104 30 Stockholm (SE)**

(56) References cited:
**WO-A1-94/17579**

• **Jacques Lemay ET AL: "Interphase Power Controllers - complementing the family of FACTS controllers", IEEE Canadian Review, 1 April 2000 (2000-04-01), XP055395723, Retrieved from the Internet: URL:http://canrev.ieee.ca/canrev34/IPC.pdf [retrieved on 2017-08-03]**

Printed by Jouve, 75001 PARIS (FR)

## Description

### TECHNICAL FIELD

The invention relates to an interphase power controller device and a method thereof.

### BACKGROUND

Highly meshed electrical networks offer several paths to passing power flows. Many intrinsic physical variables that define an electrical network make power flows difficult to predict. Unexpected problems such as loop flows, leading to congestions, or unequal loading of parallel lines, leading to poor utilization of the installed capacity, may appear. A Phase Shifting Transformer (PST) is a solution to such problems. Another issue with highly meshed electrical networks is the increase in available fault current that comes with each new interconnection. To ensure that installed protection equipment will survive a system fault, the fault current level must not be too high. Exceeding for instance the rated breaking current of the circuit breakers may result in breakdown through thermal instability or from first half cycle magnetic forces. To house renewable power production, the European Network of Transmission System Operators for Electricity (ENTSO-E) calls for further interconnection of the European transmission grid. As the electrical network becomes more interconnected and the renewable power penetration increases, issues with unbalanced path impedance are likely to grow.

Direct interconnection of the sub-transmission networks can however be inappropriate due to network conditions such as poorly balanced parallel circuits or differences in sub-transmission network load/generation. In these cases the interconnection, or some other part of the network, may experience an overload during steady state operation or during contingencies.

An interphase power controller (IPC) can solve some of these issues. The IPC ideally maintains a specified flow of active power regardless of the network voltage angles at the connection points. Thereby, the flow of active power is no longer dictated by the inherent voltage angle difference between networks and interconnections can be made regardless of reactance unbalance and high fault current levels. An IPC is previously described for similar applications in US patent 5,642,005.

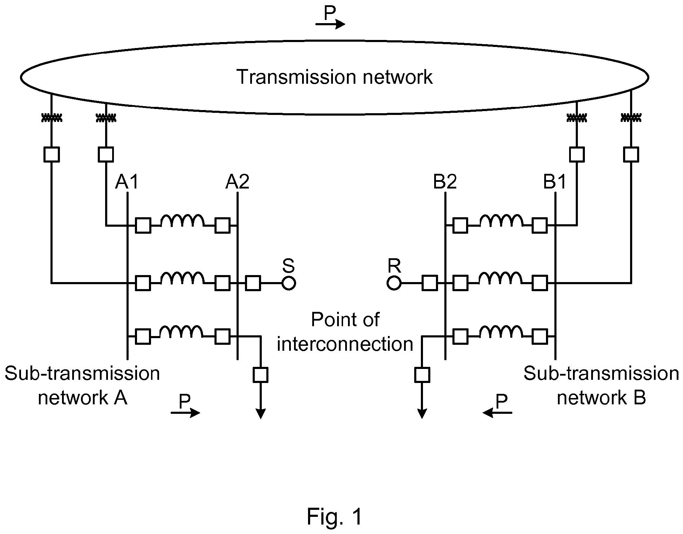

Electrical networks commonly comprises transmission networks and sub-transmission networks, the latter of which having lower system voltage level. An example of an electrical network having a transmission network with two adjacent sub-transmission networks denoted A and B, respectively, is illustrated in Fig. 1. An IPC can be arranged between send point S and receive point R.

Interconnecting these sub-transmission networks A and B is desirable since the transmission capacity of the transmission network is increased, the reliability of the transmission network is increased, and voltage levels may be improved.

WO 94/17579 A1 discloses an interphase power controller for interconnecting first and second synchronous polyphase AC networks.

Jacques Lemay et al. "Interphase Power Controllers - complementing the family of FACTS controllers", IEEE Canadian Review, 1 April 2000, describes an interphase power controller (IPC) technology for high short-circuit environments providing passive solutions for normal and contingency conditions.

### SUMMARY

It is an object of the present invention to provide an interphase power controller (IPC) device enabling reduced circuit resonance effect thereof.

According to a first aspect, an interphase power controller (IPC) device is presented herein. The IPC device comprises a first side phase line connection point a, a first side phase line connection point b and a first side phase line connection point c, a second side phase line connection point a, a second side phase line connection point b and a second side phase line connection point c, a first inductor connecting the first side phase line connection point a to the second side phase line connection point b, and a first capacitor connecting the first side phase line connection point a to the second side phase line connection point c, a second inductor connecting the first side phase line connection point b to the second side phase line connection point c, and a second capacitor connecting the first side phase line connection point b to the second side phase line connection point a, a third inductor connecting the first side phase line connection point c to the second side phase line connection point a, and a third capacitor connecting the first side phase line connection point c to the second side phase line connection point b, a first varistor connecting the first side phase line connection point a to the second side phase line connection point a, a second varistor connecting the first side phase line connection point b to the second side phase line connection point b, and a third varistor connecting the first side phase line connection point c to the second side phase line connection point c.

The IPC device may be a passive IPC device.

The first to third varistors may have a rated voltage for series resonance energy dissipation of open circuits on one side of the IPC. The first to third varistors may alternatively have a rated voltage for series resonance energy dissipation of open circuits on both sides of the IPC.

The first to third inductor may each have the same impedance value, and the first to third capacitor may each have a conjugate value thereof.

According to a second aspect a method for interphase power control is presented. The method comprises connecting a first side phase line connection point a to a second side phase line connection point b through a first inductor, connecting the first side phase line connection point a to a second side phase line connection point c through a first capacitor, connecting a first side phase line connection point b to the second side phase line connection point c through a second inductor, connecting the first side phase line connection point b to a second side phase line connection point a through a second capacitor, connecting a first side phase line connection point c to the second side phase line connection point a through a third inductor, connecting the first side phase line connection point c to the second side phase line connection point b through a third capacitor, connecting the first side phase line connection point a to the second side phase line connection point a through a first varistor, connecting the first side phase line connection point b to the second side phase line connection point b through a second varistor, and connecting the first side phase line connection point c to the second side phase line connection point c through a third varistor.

The IPC device may be a passive IPC device.

The method may further comprise providing energy dissipation of an open circuit on one side of the IPC by series resonance through the first to third varistors. The method may further comprise providing energy dissipation of an open circuit on both sides of the IPC by series resonance through the first to third varistors.

The first to third inductor may each have the same impedance value, and the first to third capacitor each have a conjugate value thereof.

## BRIEF DESCRIPTION OF THE DRAWINGS

The invention is now described, by way of example, with reference to the accompanying drawings, in which:

Fig. 1 schematically illustrates an electrical network;

Fig. 2 schematically illustrates a three phase schematic of an interphase power controller device;

Fig. 3 schematically illustrates an alternative three phase schematic of the interphase power controller device shown in Fig. 2;

Fig. 4 schematically illustrates power characteristics of the interphase power controller device shown in Figs. 2 and 3, as a function of voltage phase angle across the device;

Fig. 5 schematically illustrates varied size of reactive elements of the interphase power controller device shown in Figs. 2 and 3;

Fig. 6 schematically illustrates a one end open circuit of the interphase power controller device as shown in Figs. 2 and 3;

Fig. 7 schematically illustrates a voltage definition of an IPC during a one phase, one end open circuit;

Fig. 8 schematically illustrates a voltage definition of an IPC during a one phase, one end open circuit;

Fig. 9a schematically illustrates three phase voltage phasors;

Fig. 9b schematically illustrates the interphase power controller device connected forward;

Fig. 9c schematically illustrates the interphase power controller device connected backward;

Fig. 9d schematically illustrates voltage to ground at receiving end for the interphase power controller device connected forward, with an open circuit on a receiving side;

Fig. 9e schematically illustrates voltage to ground at receiving end for the interphase power controller device connected forward, with an open circuit on a receiving side;

Fig. 9f schematically illustrates voltage to ground at receiving end for the interphase power controller device connected backward, with an open circuit on a receiving side;

Fig. 9g schematically illustrates voltage to ground at receiving end for the interphase power controller device connected backward, with an open circuit on a receiving side;

Fig. 10 schematically illustrates an interphase power controller device with varistors connected according to an embodiment presented herein;

Fig. 11 schematically illustrates an interphase power controller device with conjugated reactive elements connected to two ends of the same network during a three phase short circuit to ground;

Fig. 12 schematically illustrates a phasor diagram for reactive elements shown in Fig. 11;

Fig. 13 schematically illustrates a parallel resonance circuit with a lossy inductor; and

Fig. 14 schematically illustrates an internal three phase fault with an interphase power controller device according to an embodiment presented herein.

## DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

An interphase power controller (IPC) device, as described in US patent 5,642,005, comprises conjugated reactive elements. The result of opening only one end thereof, without fully deenergizing the device, is a series resonance circuit and theoretical voltage magnitudes increasing without limit. Resulting voltage rise across the reactive elements is therein prevented using varistors connected to ground. With the voltage rise, caused by the series resonance circuit, the varistors start to conduct and disrupts the resonance. This is one of the major dimensioning fault cases for the IPC.

A device for interconnection of sub-transmission networks is presented herein. The device ideally maintains a specified flow of active power regardless of network voltage angles at its connection points. Thereby, the flow of active power is no longer dictated by the inherent voltage angle difference between the sub-transmission networks and interconnections can be made regardless of possible inappropriate network conditions. The device may either be connected all the time or bypassed when the natural power flow through the interconnection is preferred.

If an IPC device is used to interconnect the sub-transmission networks, several benefits may be achieved. For instance, with reference to Fig. 1, during periods of high generation and low load in a sub-transmission network B, the interconnection can be used to reroute power through the IPC via a sub-transmission network A to the transmission network. Thereby potential overloads in sub-transmission network B's connection to the transmission network are alleviated and the capacity is thus increased.

An increase in reliability obtained by use of an IPC device to interconnect sub-transmission networks A and B is enlightened through the following example. Transfer capacity between bus B2 and the transmission network is reduced due to a breakdown of either of the connections in sub-transmission network B in Fig. 1. As the interconnection with network A is normally forced to be left open, having an interconnecting device increases the reliability. Interconnection between the sub-transmission networks is possible as the IPC device ideally maintains a pre-specified power flow through the interconnection during contingencies.

Furthermore, if an IPC device with inherent fault current limiting properties is chosen the number of applications increase. In cases where the network protection is close to its limits, a device with inherent fault current limiting properties will make interconnection possible without exceeding these limits. Extensive protection equipment upgrades can thereby be avoided.

Use of a device which ensures a constant power flow, and which limits fault current contribution, to interconnect different transmission networks may be suitable in several cases: where reinforcements are required to increase the transfer capacity; where reinforcements are required to increase security of supply; when fault currents are close to the limits of the protection equipment; where a power flow controller (PFC) is required in a network; and combinations of the above.

The present invention is thus advantageous when the cost for reinforcements are high, when reinforcements are not possible, when protection equipment upgrades are costly, and/or when the controllability benefits of a conventional PFC does not supersede the relative cost increase.

Use of a passive device is advantageous to ensure high reliability as it will be based on passive components. This also has potential for reducing the cost of the interconnecting IPC device in comparison to, for instance, a Phase Shifting Transformer (PST). A passive IPC device means that the device is built based on passive electronic components such as inductors and capacitors.

The presented device will have one further benefit compared to some conventional PFCs, e.g. the PST. Since the presented IPC device ideally maintains a specified power throughput, regardless of the angle difference across it, an operator can be confident of the impact the IPC device will have once connected. This also holds for contingency situations. Other PFCs may have several settings leading to various, voltage angle dependent, power throughputs as the network conditions are altered by the perturbation.

The presented IPC device ideally maintains a constant power throughput, for a wide range of voltage angles across it, preferably in a passive manner. If needed, alterations can be performed to reverse, or alter the amount of, power throughput.

A two-branch passive topology of an IPC allows for reliable power throughput using two phase shifts and two reactive elements per phase.

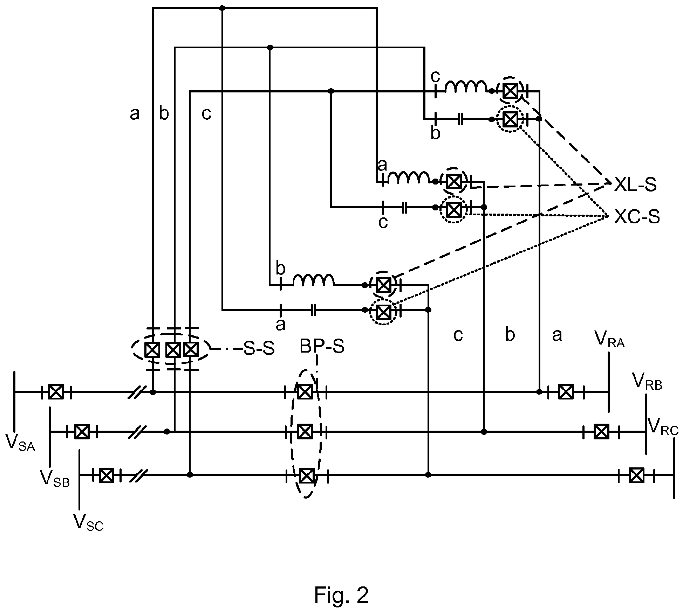

The phase shifts can be accomplished passively using fixed ratio transformers or, in one of the simplest topologies, the adjacent phases on one side. The latter version of an IPC device, comprising only two components per phase, is called IPC240, and its full schematic is shown in Fig. 2. The IPC240 device has a sending side (S) and a receiving side (R) for three phases a, b and c. The IPC240 device has sending side circuit breakers S-S, bypass breakers BP-S, and reactive breakers XL-S and XC-S. An IPC240 is an interphase power controller using two 120° phase shifted voltages.

An IPC device with a reduced number of circuit breakers, compared to the embodiment of the IPC240 illustrated in Fig. 2, is desirable and possible with the IPC device presented herein. By reducing the number of circuit breakers, a reduced cost with maintained reliability is achieved.

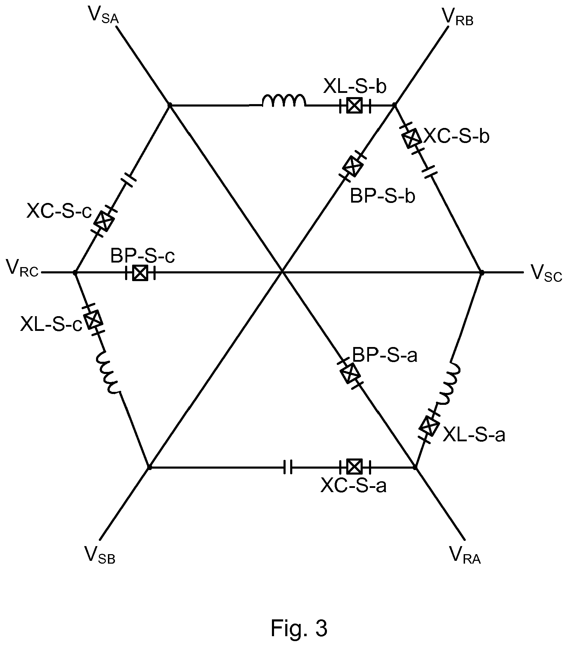

In an alternative three phase schematic, as illustrated in Fig. 3, the indices of six voltages ($V_{RC}$, $V_{SA}$, $V_{RB}$, $V_{SC}$, $V_{RA}$, $V_{SB}$) connected at either corner correspond to the a, b, and c phases of the sending end S and receiving end R. With this set of connections, the active power throughput would be positive from S to R.

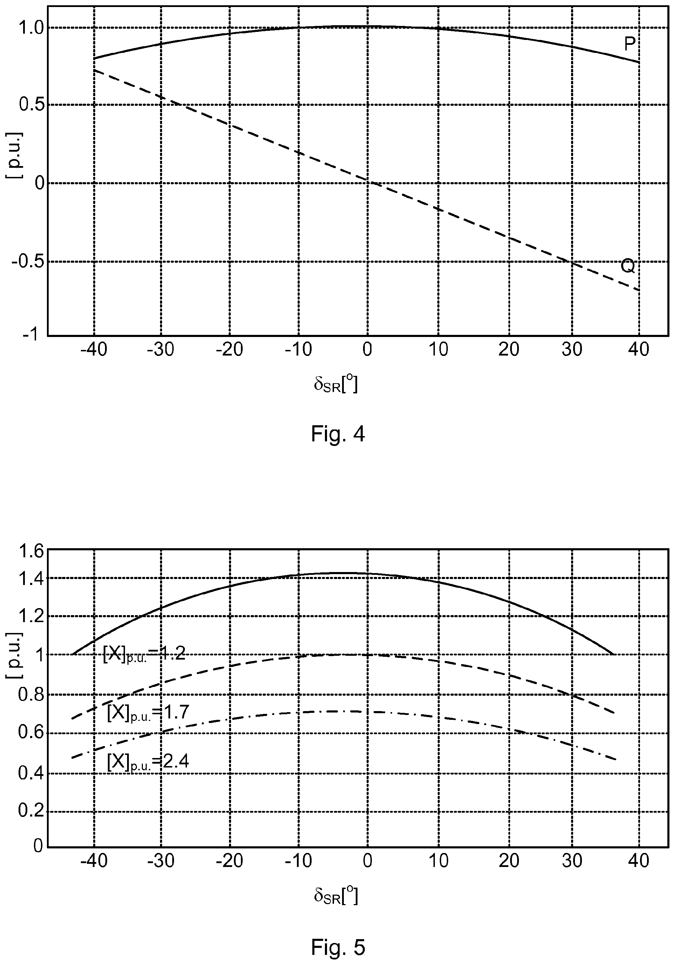

Fig. 4 illustrates power characteristics, in per unit (p.u.), of IPC240 as functions of angle across device, wherein the relation between the angle across the IPC240, the active power throughput, and the reactive power contribution is illustrated. For a given voltage angle difference across the device, $\delta_{SR} = \delta_S - \delta_R$, the active power throughput is specified by the P-$\delta_{SR}$ - curve. It is seen from Fig. 4 that the active power is more or less constant for a large range of angles (9 % reduction for $\pm 25°$ angle variation). The reactive power contribution is specified by the Q-$\delta_{SR}$ -curve, where a positive value corresponds to a reactive power contribution (capacitive).

With the IPC240 used as the interconnecting device, there are further choices to be made. The specified active power throughput is achieved by selecting the values of the reactive elements. This is illustrated in Fig. 5 where the P-$\delta_{SR}$ -curves for three IPC240S with varied size of the reactive elements are shown.

Detuned reactive elements

For an IPC240 as illustrated in Figs. 2 and 3, the reactive elements are conjugated. This means that the reactance of inductive and capacitive elements for each phase of the IPC connection are of the same magnitude but of opposite sign. Thereby the P-$\delta_{SR}$-curves shown are symmetrical about the ordinate axis. All negative voltage angle differences result in a slim to none transient angle stability contribution since the derivative is positive or zero. For all positive voltage angle differences, the relation between angle and power throughput has a negative, or zero, derivative and synchronism will thereby be lost unless there are dominating parallel connections. If this is an issue, the reactive elements can be chosen as non-conjugated, shifting the curve to either side. Thereby the negative impact on section stability is reduced. Simultaneously however, the reactive power contribution is affected in ways that could be either beneficial or detrimental. Any unwanted shift in reactive power characteristics may be remedied using fixed or, if necessary, switched shunt reactive elements.

Fault current contribution

The desired fault current limiting properties are featured by the IPC240. Due to the large impedances connected between the phases in normal operation, a fault to ground on either side results in a reduction in power throughput. During normal operation the voltage across for instance the inductance is the line-to-line system voltage. Bringing any of its node connections to ground potential will result in a voltage reduction by a factor of $1/\sqrt{3}$ across the inductor. The current through the inductor is thereby reduced to less than nominal current and the IPC240 does not contribute to the fault current in a substantial way.

Stability

An IPC device without a roughly proportional relation between power throughput and the angle difference across it will reduce the transient angle stability for a section with parallel lines. If the device is installed in a radial line, without parallel lines, loss of synchronism will be caused by the slightest disturbance. Assuming a device with the described properties is used to interconnect the sub-transmission networks in Fig. 1, the transient stability of either network will be lost if both connections with the transmission network fails. Detecting these failures and taking action through bypass of the device may however enable further power flow through the interconnection.

Resonant circuit

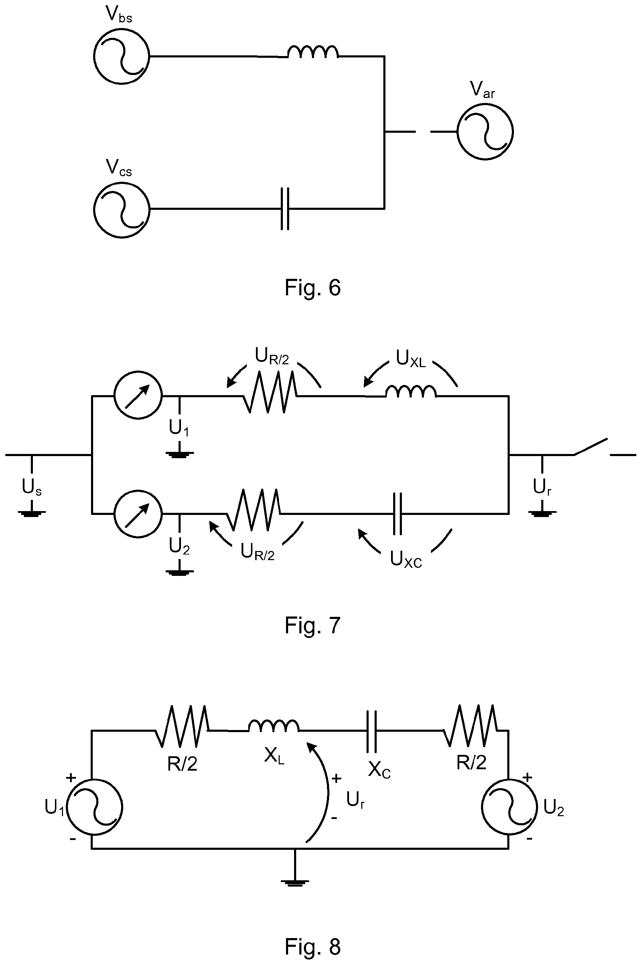

If any circuit breaker in series with the device were to be opened without taking an appropriate disconnection measures, a circuit according to Fig. 6 is the result. Fig. 6 illustrates an open end circuit without necessary precautious steps taken. Since the reactive elements are conjugated, or close to conjugated, this is a resonant circuit for the power frequency with a line to line voltage across. The voltages across the elements increase rapidly to extreme levels and therefore the resonant circuit must be broken as early as possible. A fast protection device, such as a CapThor® device, may be used for swift bypass of the capacitor.

Advantages by use of an IPC240 as interconnecting device are close to constant power flow for all anticipated network topologies and operating points with power throughput chosen through fixed values of L and C, and fault current contribution is less than the nominal pre-specified current through the device.

Open Circuit Series Resonance Voltages

During open circuit resonance for the IPC240, it matters in which direction the power is flowing prior to a misoperation. This is the equivalence of stating that it matters in which end of an IPC240 the open circuit misoperation occurs for a specific power flow direction. The magnitude of the current through the circuit is not affected, nor the voltage drop across the reactive elements. The voltage to ground on the side of open circuit however, is ideally an additional line-to-neutral in rms (root mean square) larger when the opening is on the side of outgoing power. Thereby the voltage to ground is larger than the voltage across the reactive elements for this type of misoperation.

An open circuit misoperation on the sending side (S) of the IPC device is here denoted OCS. An open circuit misoperation on the receiving side (R) of the IPC device is here denoted OCR.

A one phase equivalent view of the circuit is used to define the voltage names, which is illustrated in Fig. 7.

$U\_s$ represent sending end phase voltage to ground. $U\_r$ represent receiving end phase voltage to ground. $U\_1$ represent phase shifted voltage inductive branch to ground. $U\_2$ represent phase shifted voltage capacitive branch to ground. $U\_R/2$ represent voltage drop across resistance. $U\_XL$ represent voltage drop across inductance. $U\_XC$ represent voltage drop across capacitance.

Since the phase shifts are known to be the adjacent phase voltages for the IPC240, the circuit during one end open circuit can be redrawn for one phase as illustrated in Fig. 8.

The voltages $U\_s$, $U\_1$ and $U\_2$ are chosen. The voltage $U\_s$ only defines which one of the three symmetric phases is in focus. It will be the A phase throughout this section. $U\_1$ and $U\_2$ can thereby be selected as phase B or C. This defines the direction of power flow; choosing $U\_1$ as $U\_c$, and hence $U\_2$ as $U\_b$, results in a power flow towards the receiving end. This will be referred to as the forward direction for the receiving end opening case (OCR). In the following equations "<" denotes the angle of each phasor.

The reactive elements are conjugated, i.e. $X\_L = X$ and $X\_C = -X$.

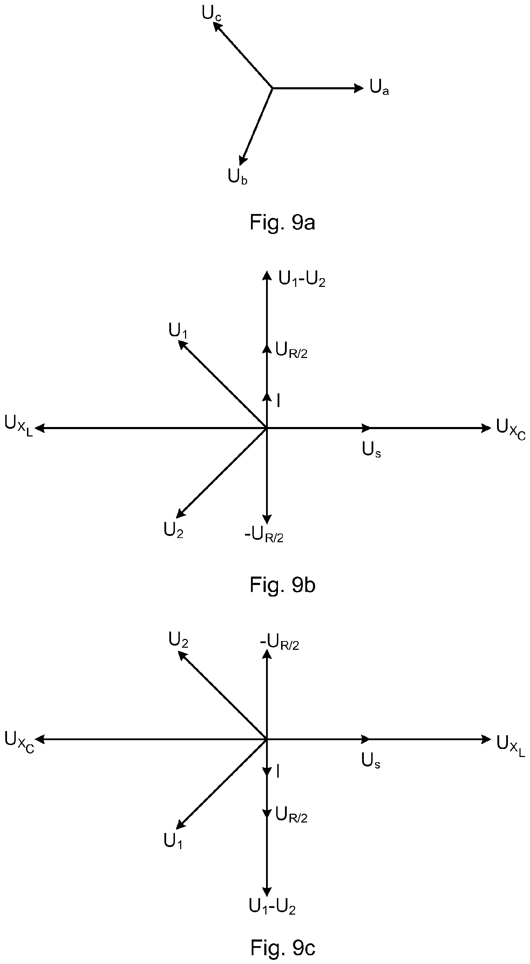

The three phase voltage phasors are defined as $U\_a = U\_m/sqrt(3) <0°$, $U\_b = U\_m/sqrt(3) <-120°$, and $U\_c = U\_m/sqrt(3) <+120°$, which is illustrated in Fig. 9a.

The current through the circuit in Fig. 8 is thus $I = (U\_1 - U\_2)/Z$, which, since the reactive elements are conjugated, is equal to $I = (U\_1 - U\_2)/R$.

The voltage drops across the resistances are $U\_R/2 = (U\_1 - U\_2)/2$, and the voltage drop across the inductive reactance is $U\_XL = (U\_1 - U\_2)/R * jX\_L = (U\_1 - U\_2)*X/R <90°$.

For the capacitive reactance the voltage drop is $U\_XC = (U\_1 - U\_2)/R * jX\_C = (U\_1 - U\_2)*X/R <-90°$.

The main voltage of interest, i.e. the voltage to ground at the open circuit end, can be attained in two ways $U\_r = U\_2 + U\_R/2 + U\_XC$, or $U\_r = U\_i - U\_R/2 - U\_XL$.

The two ways of connecting the device, forward and backward, are now processed with reference to Figs. 9b and 9c.

Forward (or backward with OCS), which is illustrated in Fig. 9b, wherein:

U_1 = U_c,

U_2 = U_b,

U_S = U_a,

$$U\_1 - U\_2 = U\_m \angle 90°,$$

$$I = U\_m/R \angle 90°,$$

$$U\_R/2 = U\_m/2 \angle 90°,$$

$$U\_XL = U\_m*X/R \angle 180°,$$

and

$$U\_XC = U\_m*X/R \angle 0°.$$

Backward (or forward with OCS), which is illustrated in Fig. 9c, wherein:

U_1 = U_b,
U_2 = U_c,
U_S = U_a,

$$U\_1 - U\_2 = U\_m \angle -90°,$$

$$I = U\_m/R \angle -90°,$$

$$U\_R/2 = U\_m/2 \angle -90°,$$

$$U\_XL = U\_m*X/R \angle 0°,$$

and

$$U\_XC = U\_m*X/R \angle -180°.$$

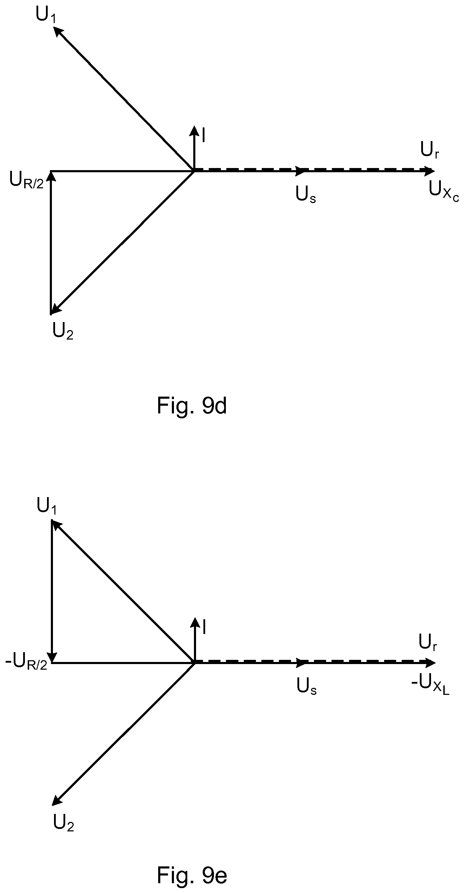

This results, in two different ways, according to what is described above, in the voltage to ground at the receiving end, illustrated in Figs. 9d-9g.

Forward (or backward with OCS), which is illustrated in Figs. 9d and 9e, wherein:

U_1 is U_c and U_2 is U_b while U_s is U_a. This gives a power flow from left to right.
U_r = U_2 + U_R/2 + U_XC, which is illustrated in Fig. 9d.
U_r = U_1 - U_R/2 - U_XL, which is illustrated in Fig. 9e.

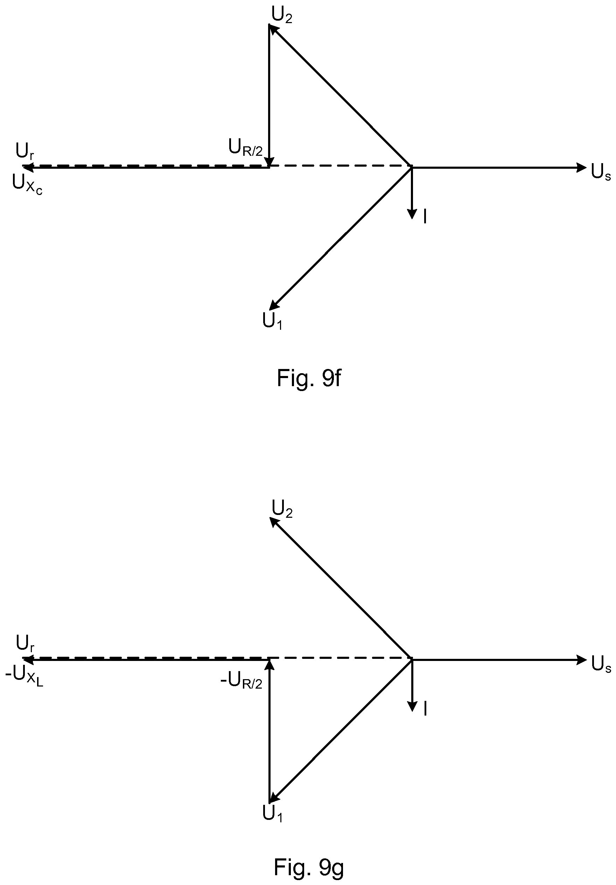

Backward (or forward with OCS), which is illustrated in Figs. 9f and 9g, wherein:

U_1 is U_b and U_2 is U_c while U_s is U_a. This gives a power flow from right to left.

U_r = U_2 + U_R/2 + U_XC, which is illustrated in Fig. 9f.

U_r = U_1 - U_R/2 - U_XL, which is illustrated in Fig. 9g.

The difference in voltage magnitude can through trigonometric vector analysis be deduced as 2*cos(U_1) = U_m/sqrt(3), or in other words, the rms line-to-neutral voltage magnitude.

This only accounts for the voltage drop across ideal reactive components. The resistive voltage drop will also be added to the reactive element voltage drop in reality depending on how the resistance is distributed.

The presented solution has varistors parallel to the IPC device, i.e. between the U_s and U_r nodes, instead of to ground at either end. The voltage across them varies and assuming that varistors parallel to the IPC device and varistors to ground have equal ratings, the following can be deduced:

- In the case of forward connection sending end open circuit, this is a higher voltage than U_r. In the case of backward connection receiving end open circuit, this is a higher voltage than U_r. A varistor parallel to the IPC device will absorb all energy for these faults.

- In the case of forward connection receiving end open circuit, this is a lower voltage than U_r. In the case of backward connection sending end open circuit, this is a lower voltage than U_r. A varistor to ground will absorb all energy for these faults.

City Infeed Cable IPC Application

A reason for use of a city infeed cable IPC application is that load increase at a city bus requires extra transfer capacity.

Possible problems of adding a cable to a city bus is power flow control issues due to low cable impedance and fault currents levels exceeding protection equipment ratings.

Solutions to the above problems may e.g. be:

a) Phase shifting transformer (PST) + fault current limiter (FCL), which solves the power flow division problem and limits fault current.
b) Series reactor (SR)/thyristor switched series reactor (TSSR)/overload line controller (OLC), which may solve the power flow division problem and fault current increase.
c) IPC, which solves the power flow division problem and limits fault current.

With an upgrade of the protection equipment to mitigate the fault current problem a PST may be used to solve the power flow division problem.

DC-component in minimum breaker topology IPCs

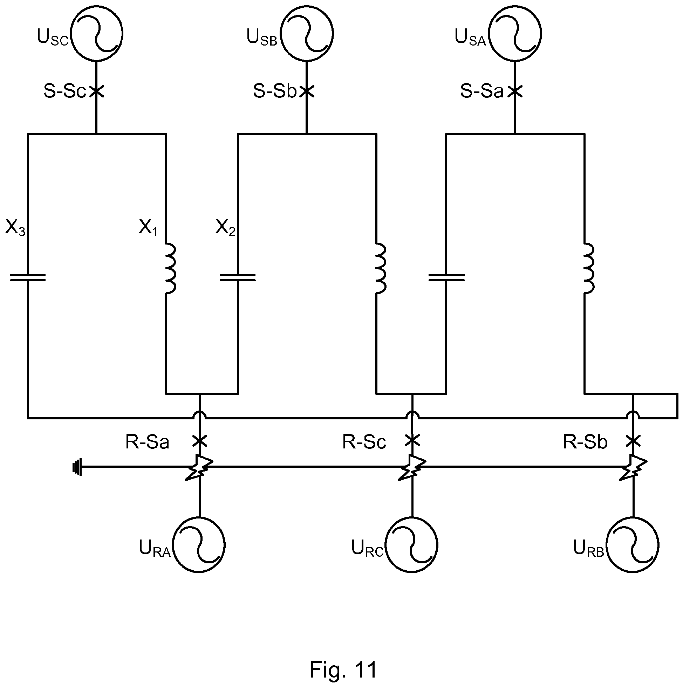

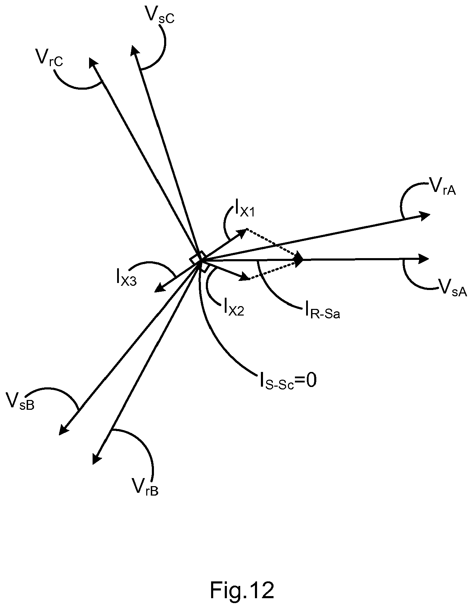

An IPC with conjugated reactive elements will not have the same currents on both sides during multiphase short circuits. The interphase connections along with the reactive elements form parallel resonance circuits as two or three phases on one side are short circuited. The circuit illustrated in Fig. 11 shows an IPC240 extracted from its network with all resistances neglected, with conjugated elements connected to two ends of the same network, with bolted three phase fault to ground on receiving side. Assuming a three phase fault to ground occurs on the receiving side, as shown, and assuming that sending side voltages are not reduced during the fault, a resulting phasor diagram is shown in Fig. 12.

The phasor diagram shows the theoretical source voltages along with the currents through elements X1 = X and X2 = X3 =-X of Fig. 11 during the fault. Since all nodes on the receiving sided are grounded, the voltage drop across each reactive element goes from line-to-line levels to line-to-neutral. In the case of the inductive reactance X1, it would have the voltage drop from $U_{SC}$ to ground across it. Just after the fault inception however, the magnetic energy from the current prior to the fault will also give rise to a voltage drop since the current through it does not drop to zero immediately. The corresponding goes for the electric field energy of the capacitor. Neglecting both of these, focusing on the steady state currents, the current through circuit breaker S-Sc is according to Equation 1 equal to zero as the reactive elements are conjugated and considered as ideal (X1 + X3 goes to zero).

$$I_{S-Sc} = I_{X1} + I_{X3} = j \frac{U_{SC}}{\left(\frac{X_1 X_3}{X_1 + X_3}\right)} \qquad \text{Equation 1}$$

$$I_{R-Sa} = I_{X1} + I_{X2} = j\left(\frac{U_{SC}}{X_1} + \frac{U_{SB}}{X_2}\right) \qquad \text{Equation 2}$$

The current through R-Sa, on the other hand, is the sum of the currents in X1 and X2 which are caused by two different voltages, which is illustrated in equation 2. Hence they don't add up to zero. Considering the energies stored in the reactive elements at fault inception, the current through circuit breaker S-Sc only consists of the DC-decay from the discharge of the inductance.

At perfect resonance, negligible voltage angle difference across the device, with steady state conditions, nominal voltage levels during the fault, and ideal reactive elements, the current magnitude in R-Sa can be calculated as in Equation 3. The equation is graphically deduced from Fig. 12. Furthermore, the nominal current in one of the receiving end breakers can, with the same conditions but nominal operation, be calculated as in Equation 4. Hence the fault current contribution from the IPC is ideally equal to the nominal current of the device.

$$I_{R-Sa} = I_{X1} + I_{X2} = 2\cos(30°)\frac{U_{LN}}{X} = \sqrt{3}\frac{U_{LN}}{X} \qquad \text{Equation 3}$$

$$I_{IPC\ nominal} = I_{X1} + I_{X2} = 2\cos(60°)\frac{U_{LL}}{X} = \sqrt{3}\frac{U_{LN}}{X} \qquad \text{Equation 4}$$

The conditions mentioned are however only true in theory, since:

- Stray reactance might affect the tuned resonance of the IPC reactive elements.
- The voltage angle is not negligible. The applications studied here have shown angles in the realm of 5°-15° nominally and up to 50° during post fault power swings.
- Steady state conditions don't apply. The stored energy at fault inception is discharged into the fault.
- High fault currents flowing through other parts of the networks result in a lowered voltage magnitude during the fault.
- The reactive elements are not ideal. The resistance of power system capacitors are often disregarded but the inductance is expected to have a resistance in the realm of 1 $\Omega$. This results in a small alternating current on the network side and a magnified parallel resonance current on the faulted side.

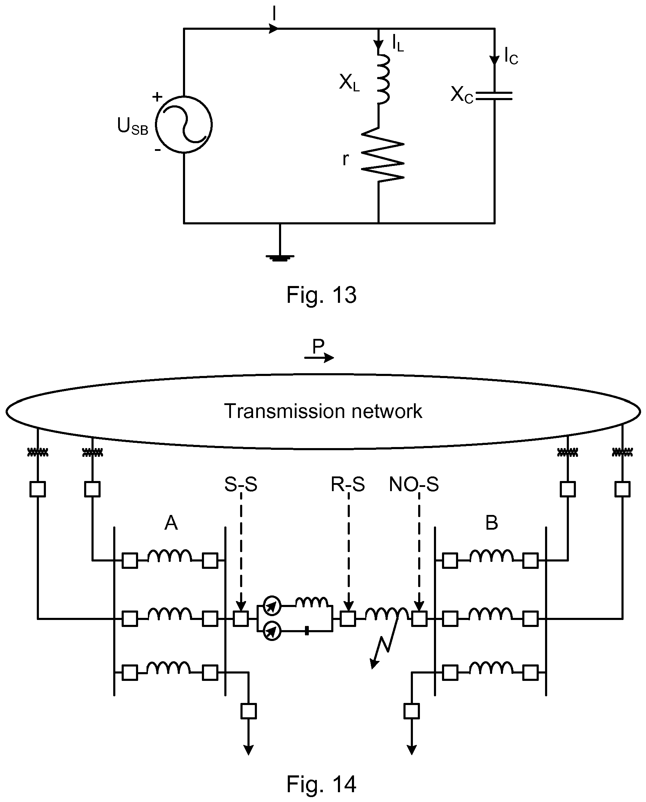

The last point in the list is of particular interest. Continuing with the neglect of the capacitor resistance but adding a resistance to the inductor, the parallel resonance circuit resulting from faults to ground involving several phases can be drawn as in Fig. 13.

The current I in Fig. 13 can be approximated by Equation 5 for negligible capacitor resistance. In Equation 5, $U_{SB}$ is the sending end voltage, $\omega_0$ is the resonance frequency, C is the capacitance, L is the reactor inductance, and r is the reactor resistance.

$$I \approx U_{SB}\frac{r}{\omega_0^2 L^2} \approx U_{SB}\omega_0^2 C^2 r \qquad \text{Equation 5}$$

However, since current magnification is an inherent part of any parallel resonance circuit with large reactance and small resistance, the currents in the IPC branches are large in comparison. The magnification factor, calculated as $\omega_0 L/r$, relates the source current to the current in the branches when the capacitor resistance is negligible. An approximation of the branch currents for negligible capacitor resistance is found in the form of Equation 6.

$$I_L \approx -I_C \approx \frac{U_{SB}}{\omega_0 L} \approx U_{SB}\omega_0 C \approx U_{SB}\frac{r}{\omega_0^2 L^2}Q \approx IQ \qquad \text{Equation 6}$$

To summarize, there will be a DC-component contribution from the IPC to the fault originating from the energy stored in the reactor(s). Further, a magnified sending side alternating current is superimposed onto the DC-component. This indirectly allows for an earlier first zero crossing but also adds to the total fault current contribution.

Connecting varistors parallel to the IPC device is presented herein. Connecting the varistors parallel to the IPC device allows for triggered gaps or other fast varistor bypass solutions. Thereby the required energy handling capacity of the varistors may be limited since the resonance can be disrupted by the bypass. Bypassing a varistor parallel to a reactive element disrupts a series resonance in open circuit conditions but is the equivalence of a bolted phase-to-phase fault in nominal conditions. Bypassing a varistor parallel to the entire device disrupts a series resonance in open circuit conditions but is the equivalence of bypassing the device in nominal conditions. The latter has a less severe impact in case of misoperation.

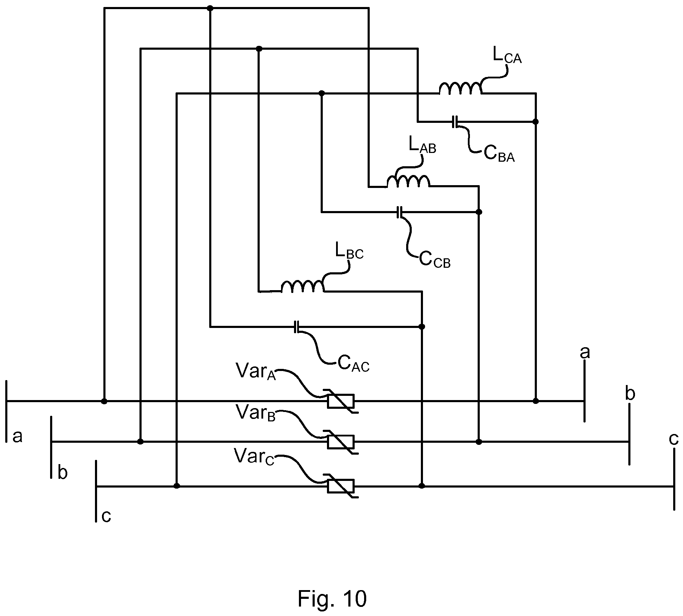

Fig. 10 illustrates connection of varistors parallel to the IPC device.

Further benefits of this connection of varistors parallel to the IPC depend on how the rated voltage of the varistor, which is proportional to the conduction threshold voltage, is selected.

Varistor voltage rating

If the rating of the varistors parallel to the device is selected at the same level as varistors connected to ground (marginally higher than the line-to-ground voltage), these varistors will keep the voltage across the reactive elements lower for forward flow receiving end open circuit resonance. Thereby sending end line-to-ground energy handling varistors can be eliminated for a unidirectional device. The benefits from the presented configuration include a lower voltage across the reactive elements during resonance as well as lower current.

According to a simulation, with a sending end three phase open circuit series resonance with varistor protection parallel to the device, a sending end circuit breaker, S-S, (as illustrated in Fig. 2) is unintentionally opened at ti leaving the circuit in resonance. The current through the varistors, which are due to the voltage magnitude increase, triggers the opening of the far end breaker, $V_R$, at t2. The varistors limit the voltage across the reactive elements until the circuit is deenergized from the opening of $V_R$.

Since the voltage across varistors connected parallel to the device is proportional to the voltage angle across the device, the nominal voltage across the varistors is only a fraction of the line-to-neutral voltage inherent to connections to ground or to the line-to-line voltage inherent to a connection parallel to reactive elements. This would not only affect the leakage current but also allow for a reduction of the rated voltage of the varistor.

If the rating of the varistors parallel to the device is selected at a lower level than varistors connected to ground, preferably about half the line-to-ground voltage, there are several further benefits:

With lower rating, the varistors parallel to the IPC device keep the voltage across the reactive elements at an even lower level while carrying less current. Less energy capacity is thereby providing better protection during one end open circuit.

With low enough rating, the varistors parallel to the IPC device take on the majority of the resonance energy from open circuit resonance occurring on either side and for power flows in either direction. Thereby the energy handling varistors connected to ground on both ends can be eliminated for unidirectional and bidirectional devices.

With low enough rating the DC-component issue inherent to the removal of IPC branch circuit breakers, i.e. removing two full sets of circuit breakers from the device, is resolved. The DC-component hinders the current interruption on one side of the IPC, for a DC-component in minimum breaker topology IPCs. This current is conducted through the varistors.

With low enough rating, post-disconnection circulating currents that occur for some topologies are conducted through the varistors.

With low rated voltage comes a risk of large capacitor discharge current spikes for multiple phase faults. A damping reactor may be connected in series with the varistor to limit the dI/dt of such currents. Simulations have shown that a 3 mH reactor is sufficient for a 130 kV system voltage application with a short circuit level of 16 kArms. The size of the initial spike with a 3 mH damping reactor varies with varistor rating. The varistors may e.g. be metal-oxide varistors.

The varistor connection described herein is a novel way of protecting the IPC device. Depending on the selected rating the varistor parallel to the IPC device may replace one or both of ground connected (end side) varistors and potentially lower the required energy rating of a single remaining varistor connected parallel to the device. This is done with improved protective performance and, for low enough rating, enabling the topology without branch current breakers otherwise troubled by slowly decaying DC-components in the circuit breakers during faults to ground including multiple phases. The theoretical maximum benefit would be to reduce the amount of parallel varistor energy handling capacity by two thirds, reducing the required voltage and current for the remaining varistors, reducing the required voltage and current rating for the reactive elements, and allowing for the removal of up to two sets of circuit breakers.

Fig. 14 schematically illustrates an internal three phase fault with an IPC device according to an embodiment.

According to an embodiment an interphase power controller (IPC) device is presented. The IPC comprises a first side phase line connection point a, a first side phase line connection point b and a first side phase line connection point c, a second side phase line connection point a, a second side phase line connection point b and a second side phase line connection point c, a first inductor $L_{AB}$ connecting the first side phase line connection point a to the second side phase line connection point b, and a first capacitor $C_{AC}$ connecting the first side phase line connection point a to the second side phase line connection point c, a second inductor $L_{BC}$ connecting the first side phase line connection point b to the second side phase line connection point c, and a second capacitor $C_{BA}$ connecting the first side phase line connection point b to the second side phase line connection point a, a third inductor $L_{CA}$ connecting the first side phase line connection point c to the second side phase line connection point a, and a third capacitor $C_{CB}$ connecting the first side phase line connection point c to the second side phase line connection point b, a first varistor $Var_A$ connecting the first side phase line connection point a to the second side phase line connection point a, a second varistor $Var_B$ connecting the first side phase line connection point b to the second side phase line connection point b, and a third varistor $Var_C$ connecting the first side phase line connection point c to the second side phase line connection point c.

The IPC may be a passive IPC device.

The first to third varistors may have a rated voltage for series resonance energy dissipation of open circuits on one side of the IPC device. The first to third varistors may alternatively have a rated voltage for series resonance energy dissipation of open circuits on both sides of the IPC device. The rated voltage may be half of a line-to-ground voltage for the IPC device.

The first to third inductor may each have the same impedance value, and the first to third capacitor may each have a conjugate value thereof.

According to an embodiment a method for interphase power control of an interphase power controller (IPC) device is presented. The method comprises connecting a first side phase line connection point a to a second side phase line connection point b through a first inductor $L_{AB}$, connecting the first side phase line connection point a to a second side phase line connection point c through a first capacitor $C_{AC}$, connecting a first side phase line connection point b to the second side phase line connection point c through a second inductor $L_{BC}$, connecting the first side phase line connection point b to a second side phase line connection point a through a second capacitor $C_{BA}$, connecting a first side phase line connection point c to the second side phase line connection point a through a third inductor $L_{CA}$, connecting the first side phase line connection point c to the second side phase line connection point b through a third capacitor $C_{CB}$, connecting the first side phase line connection point a to the second side phase line connection point a through a first varistor $Var_A$, connecting the first side phase line connection point b to the second side phase line connection point b through a second varistor $Var_B$, and connecting the first side phase line connection point c to the second side phase line connection point c through a third varistor $Var_C$.

The method may further comprise providing energy dissipation of an open circuit on one side of the IPC by series resonance through the first to third varistors. The method may alternatively comprise providing energy dissipation of an open circuit on both sides of the IPC by series resonance through the first to third varistors.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1.  An interphase power controller (IPC) device, comprising:

    a first side phase line connection point a, a first side phase line connection point b and a first side phase line connection point c;
    a second side phase line connection point a, a second side phase line connection point b and a second side phase line connection point c;
    a first inductor ($L_{AB}$) connecting the first side phase line connection point a to the second side phase line connection point b,
    a second inductor ($L_{BC}$) connecting the first side phase line connection point b to the second side phase line connection point c,
    a third inductor ($L_{CA}$) connecting the first side phase line connection point c to the second side phase line connection point a,
    **characterized by** a first capacitor (Cac) connecting the first side phase line connection point a to the second side phase line connection point c; a second capacitor (Cba) connecting the first side phase line connection point b to the second side phase line connection point a; a third capacitor (Ccb) connecting the first side phase line connection point c to the second side phase line connection point b;
    a first varistor ($Var_A$) connecting the first side phase line connection point a to the second side phase line connection point a;

a second varistor ($Var_B$) connecting the first side phase line connection point b to the second side phase line connection point b; and
a third varistor ($Var_C$) connecting the first side phase line connection point c to the second side phase line connection point c.

2. The IPC device according to claim 1, wherein the IPC device is a passive IPC device.

3. The IPC device according to claim 1 or 2, wherein the first to third varistors have a rated voltage for series resonance energy dissipation of open circuits on one side of the IPC.

4. The IPC device according to claims 1 or 2, wherein the first to third varistors have a rated voltage for series resonance energy dissipation of open circuits on both sides of the IPC.

5. The IPC device according to any one of claims 3 to 4, wherein the rated voltage is half of a line-to-ground voltage for the IPC device.

6. The IPC device according to any one of claims 1 to 5, wherein the first to third inductor each have the same impedance value, and the first to third capacitor each have a conjugate value thereof.

7. A method for interphase power control by an interphase power controller (IPC) device, comprising:

connecting a first side phase line connection point a to a second side phase line connection point b through a first inductor ($L_{AB}$); and
connecting a first side phase line connection point b to the second side phase line connection point c through a second inductor ($L_{BC}$);
connecting a first side phase line connection point c to the second side phase line connection point a through a third inductor ($L_{CA}$);
**characterized by**
connecting the first side phase line connection point a to a second side phase line connection point c through a first capacitor (Cac);
connecting the first side phase line connection point b to a second side phase line connection point a through a second capacitor (Cba);
connecting the first side phase line connection point c to the second side phase line connection point b through a third capacitor (Ccb); connecting the first side phase line connection point a to the second side phase line connection point a through a first varistor ($Var_A$);
connecting the first side phase line connection point b to the second side phase line connection point b through a second varistor ($Var_B$); and
connecting the first side phase line connection point c to the second side phase line connection point c through a third varistor ($Var_C$).

8. The method according to claim 7, wherein the IPC device is a passive IPC device.

9. The method according to claim 7 or 8, comprising:
providing energy dissipation of an open circuit on one side of the IPC by series resonance through the first to third varistors.

10. The method according to claims 7 or 8, comprising:
providing energy dissipation of an open circuit on both sides of the IPC by series resonance through the first to third varistors.

11. The method according to any one of claims 7 to 10, wherein the first to third varistors have a rated voltage of half of a line-to-ground voltage for the IPC device.

12. The method according to any one of claims 7 to 11, wherein the first to third inductor each have the same impedance value, and the first to third capacitor each have a conjugate value thereof.

**Patentansprüche**

1. Zwischenphasige Leistungsreglervorrichtung (Interphase Power Controller device, IPC-Vorrichtung), umfassend:

    einen ersten Verbindungspunkt einer Nebenphasenleitung a, einen ersten Verbindungspunkt einer Nebenphasenleitung b und einen ersten Verbindungspunkt einer Nebenphasenleitung c;
    einen zweiten Verbindungspunkt der Nebenphasenleitung a, einen zweiten Verbindungspunkt der Nebenphasenleitung b und einen zweiten Verbindungspunkt der Nebenphasenleitung c;
    einen ersten Induktor ($L_{AB}$), der den ersten Verbindungspunkt der Nebenphasenleitung a mit dem zweiten Verbindungspunkt der Nebenphasenleitung b verbindet,
    einen zweiten Induktor ($L_{BC}$), der den ersten Verbindungspunkt der Nebenphasenleitung b mit dem zweiten Verbindungspunkt der Nebenphasenleitung c verbindet,
    einen dritten Induktor ($L_{CA}$), der den ersten Verbindungspunkt der Nebenphasenleitung c mit dem zweiten Verbindungspunkt der Nebenphasenleitung a verbindet,
    **gekennzeichnet durch** einen ersten Kondensator ($C_{AC}$), der den ersten Verbindungspunkt der Nebenphasenleitung a mit dem zweiten Verbindungspunkt der Nebenphasenleitung c verbindet; einen zweiten Kondensator ($C_{BA}$), der den ersten Verbindungspunkt der Nebenphasenleitung b mit dem zweiten Verbindungspunkt der Nebenphasenleitung a verbindet; einen dritten Kondensator ($C_{CB}$), der den ersten Verbindungspunkt der Nebenphasenleitung c mit dem zweiten Verbindungspunkt der Nebenphasenleitung b verbindet;
    einen ersten Varistor ($Var_A$), der den ersten Verbindungspunkt der Nebenphasenleitung a mit dem zweiten Verbindungspunkt der Nebenphasenleitung a verbindet;
    einen zweiten Varistor ($Var_B$), der den ersten Verbindungspunkt der Nebenphasenleitung b mit dem zweiten Verbindungspunkt der Nebenphasenleitung b verbindet; und
    einen dritten Varistor ($Var_C$), der den ersten Verbindungspunkt der Nebenphasenleitung c mit dem zweiten Verbindungspunkt der Nebenphasenleitung v verbindet.

2. IPC-Vorrichtung nach Anspruch 1, wobei die IPC-Vorrichtung eine passive IPC-Vorrichtung ist.

3. IPC-Vorrichtung nach Anspruch 1 oder 2, wobei der erste bis dritte Varistor eine Nennspannung für eine Energiedissipation einer Reihenresonanz von offenen Schaltkreisen auf einer Seite des IPC aufweisen.

4. IPC-Vorrichtung nach Anspruch 1 oder 2, wobei der erste bis dritte Varistor eine Nennspannung für eine Energiedissipation einer Reihenresonanz von offenen Schaltkreisen auf beiden Seiten des IPC aufweisen.

5. IPC-Vorrichtung nach einem der Ansprüche 3 bis 4; wobei die Nennspannung die Hälfte einer Leiter-Erde-Spannung für die IPC-Vorrichtung beträgt.

6. IPC-Vorrichtung nach einem der Ansprüche 1 bis 5; wobei der erste bis dritte Induktor jeweils den gleichen Impedanzwert aufweisen und der erste bis dritte Kondensator jeweils einen konjugierten Wert davon aufweisen.

7. Verfahren für eine zwischenphasige Leistungsregelung durch eine zwischenphasige Leistungsreglervorrichtung (Interphase Power Controller device, IPC-Vorrichtung), umfassend:

    Verbinden eines ersten Verbindungspunkts einer Nebenphasenleitung a mit einem zweiten Verbindungspunkt einer Nebenphasenleitung b durch einen ersten Induktor ($L_{AB}$) ; und
    Verbinden eines ersten Verbindungspunkts der Nebenphasenleitung b mit einem zweiten Verbindungspunkt einer Nebenphasenleitung c durch einen zweiten Induktor ($L_{BC}$) ; und
    Verbinden eines ersten Verbindungspunkts der Nebenphasenleitung c mit einem zweiten Verbindungspunkt der Nebenphasenleitung a durch einen dritten Induktor ($L_{CA}$); und
    **gekennzeichnet durch**:

        Verbinden des ersten Verbindungspunkts der Nebenphasenleitung a mit dem zweiten Verbindungspunkt der Nebenphasenleitung c durch einen ersten Kondensator ($C_{AC}$);
        Verbinden des ersten Verbindungspunkts der Nebenphasenleitung b mit dem zweiten Verbindungspunkt der Nebenphasenleitung a durch einen zweiten Kondensator ($C_{BA}$);
        Verbinden des ersten Verbindungspunkts der Nebenphasenleitung c mit dem zweiten Verbindungspunkt der Nebenphasenleitung b durch einen dritten Kondensator ($C_{CB}$); und
        Verbinden des ersten Verbindungspunkts der Nebenphasenleitung a mit dem zweiten Verbindungspunkt der Nebenphasenleitung a durch einen ersten Varistor ($Var_A$) ;
Verbinden des ersten Verbindungspunkts der Nebenphasenleitung b mit dem zweiten Verbindungspunkt der Nebenphasenleitung b durch einen zweiten Varistor ($Var_B$) ; und
Verbinden des ersten Verbindungspunkts der Nebenphasenleitung c mit dem zweiten Verbindungspunkt der Nebenphasenleitung c durch einen dritten Varistor ($Var_C$).

8. Verfahren nach Anspruch 7, wobei die IPC-Vorrichtung eine passive IPC-Vorrichtung ist.

9. Verfahren nach Anspruch 7 oder 8, umfassend:
   Bereitstellen einer Energiedissipation eines offenen Schaltkreises auf einer Seite des IPC mithilfe einer Reihenresonanz durch den ersten bis dritten Varistor.

10. Verfahren nach Anspruch 7 oder 8, umfassend:
    Bereitstellen einer Energiedissipation eines offenen Schaltkreises auf beiden Seiten des IPC mithilfe einer Reihenresonanz durch den ersten bis dritten Varistor.

11. Verfahren nach einem der Ansprüche 7 bis 10, wobei der erste bis dritte Varistor eine Nennspannung aufweisen, welche eine Hälfte einer Leiter-Erde-Spannung für die IPC-Vorrichtung beträgt.

12. Verfahren nach einem der Ansprüche 7 bis 11, wobei der erste bis dritte Induktor jeweils den gleichen Impedanzwert aufweisen und der erste bis dritte Kondensator jeweils einen konjugierten Wert davon aufweisen.

**Revendications**

1. Dispositif régulateur de puissance interphase (IPC), comprenant :

   un premier point de branchement de ligne de phase latérale a, un premier point de branchement de ligne de phase latérale b et un premier point de branchement de ligne de phase latérale c ;
   un deuxième point de branchement de ligne de phase latérale a, un deuxième point de branchement de ligne de phase latérale b et un deuxième point de branchement de ligne de phase latérale c ;
   une première bobine d'induction ($L_{AB}$) branchant le premier point de branchement de ligne de phase latérale a au deuxième point de branchement de ligne de phase latérale b,
   une deuxième bobine d'induction ($L_{BC}$) branchant le premier point de branchement de ligne de phase latérale b au deuxième point de branchement de ligne de phase latérale c,
   une troisième bobine d'induction ($L_{CA}$) branchant le premier point de branchement de ligne de phase latérale c au deuxième point de branchement de ligne de phase latérale a,
   **caractérisé par** un premier condensateur ($C_{AC}$) branchant le premier point de branchement de ligne de phase latérale a au deuxième point de branchement de ligne de phase latérale c ; un deuxième condensateur ($C_{BA}$) branchant le premier point de branchement de ligne de phase latérale b au deuxième point de branchement de ligne de phase latérale a ; un troisième condensateur ($C_{CB}$) branchant le premier point de branchement de ligne de phase latérale c au deuxième point de branchement de ligne de phase latérale b ;
   une première varistance ($Var_A$) branchant le premier point de branchement de ligne de phase latérale a au deuxième point de branchement de ligne de phase latérale a ;
   une deuxième varistance ($Var_B$) branchant le premier point de branchement de ligne de phase latérale b au deuxième point de branchement de ligne de phase latérale b ; et
   une troisième varistance ($Var_C$) branchant le premier point de branchement de ligne de phase latérale c au deuxième point de branchement de ligne de phase latérale c.

2. Dispositif IPC selon la revendication 1, le dispositif IPC étant un dispositif IPC passif.

3. Dispositif IPC selon la revendication 1 ou 2, dans lequel les première à troisième varistances ont une tension nominale pour la dissipation d'énergie par résonance série de circuits ouverts sur un côté de l'IPC.

4. Dispositif IPC selon la revendication 1 ou 2, dans lequel les première à troisième varistances ont une tension nominale pour la dissipation d'énergie par résonance série de circuits ouverts sur les deux côtés de l'IPC.

5. Dispositif IPC selon l'une quelconque des revendications 3 à 4, dans lequel la tension nominale est la moitié d'une tension ligne-terre pour le dispositif IPC.

**6.** Dispositif IPC selon l'une quelconque des revendications 1 à 5, dans lequel les première à troisième bobines d'induction ont chacune la même valeur d'impédance, et les premier à troisième condensateurs ont chacun une valeur conjuguée de celle-ci.

**7.** Procédé pour la régulation de puissance interphase par un dispositif régulateur de puissance interphase (IPC), comprenant :

le branchement d'un premier point de branchement de ligne de phase latérale a à un deuxième point de branchement de ligne de phase latérale b par le biais d'une première bobine d'induction ($L_{AB}$) ; et
le branchement d'un premier point de branchement de ligne de phase latérale b au deuxième point de branchement de ligne de phase latérale c par le biais d'une deuxième bobine d'induction ($L_{BC}$),
le branchement d'un premier point de branchement de ligne de phase latérale c au deuxième point de branchement de ligne de phase latérale a par le biais d'une troisième bobine d'induction ($L_{CA}$) ;
**caractérisé par**
le branchement du premier point de branchement de ligne de phase latérale a à un deuxième point de branchement de ligne de phase latérale c par le biais d'un premier condensateur ($C_{AC}$) ;
le branchement du premier point de branchement de ligne de phase latérale b à un deuxième point de branchement de ligne de phase latérale a par le biais d'un deuxième condensateur ($C_{BA}$) ;
le branchement du premier point de branchement de ligne de phase latérale c au deuxième point de branchement de ligne de phase latérale b par le biais d'un troisième condensateur ($C_{CB}$) ;
le branchement du premier point de branchement de ligne de phase latérale a au deuxième point de branchement de ligne de phase latérale a par le biais d'une première varistance ($Var_A$) ;
le branchement du premier point de branchement de ligne de phase latérale b au deuxième point de branchement de ligne de phase latérale b par le biais d'une deuxième varistance ($Var_B$) ; et
le branchement du premier point de branchement de ligne de phase latérale c au deuxième point de branchement de ligne de phase latérale c par le biais d'une troisième varistance ($Var_C$).

**8.** Procédé selon la revendication 7, dans lequel le dispositif IPC est un dispositif IPC passif.

**9.** Procédé selon la revendication 7 ou 8, comprenant :
la réalisation d'une dissipation d'énergie d'un circuit ouvert sur un côté de l'IPC par résonance série à travers les première à troisième varistances.

**10.** Procédé selon la revendication 7 ou 8, comprenant :
la réalisation d'une dissipation d'énergie d'un circuit ouvert sur les deux côtés de l'IPC par résonance série à travers les première à troisième varistances.

**11.** Procédé selon l'une quelconque des revendications 7 à 10, dans lequel les première à troisième varistances ont une tension nominale égale à la moitié d'une tension ligne-terre pour le dispositif IPC.

**12.** Procédé selon l'une quelconque des revendications 7 à 11, dans lequel les première à troisième bobines d'induction ont chacune la même valeur d'impédance, et les premier à troisième condensateurs ont chacun une valeur conjuguée de celle-ci.

P

Transmission network

A1    A2    B2    B1

S    R

Point of
interconnection

Sub-transmission
network A

P

Sub-transmission
network B

P

Fig. 1

Fig. 2

Fig. 3

Fig. 4

Fig. 5

Fig. 6

Fig. 7

Fig. 8

Fig. 9a

Fig. 9b

Fig. 9c

Fig. 9d

Fig. 9e

U₂

U_r
U_{X_c}

U_{R/2}

U_s

I

U₁

Fig. 9f

U₂

U_r
-U_{X_L}

-U_{R/2}

U_s

I

U₁

Fig. 9g

Fig. 10

Fig. 11

Fig.12

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5642005 A

- WO 9417579 A1

**Non-patent literature cited in the description**

- **JACQUES LEMAY et al.** Interphase Power Controllers - complementing the family of FACTS controllers. *IEEE Canadian Review,* 01 April 2000